# EUROPÄISCHE PATENTSCHRIFT

(11) **EP 1 833 765 B1**
(45) Veröffentlichungstag und Bekanntmachung des Hinweises auf die Patenterteilung: **24.08.2016**
(21) Anmeldenummer: 05824267.8
(22) Anmeldetag: 09.12.2005
(51) Int. Cl.: C02F 1/32

(54) **ELEKTROGERÄT FÜR GARTENTEICHE, SPRINGBRUNNEN, AQUARISTIK UND AUSSENANLAGEN MIT WENIGSTENS EINEM LEUCHTMITTEL**
ELECTRICAL APPLIANCE FOR GARDEN PONDS, FOUNTAINS, AQUARIA AND OUTDOOR INSTALLATIONS, COMPRISING AT LEAST ONE LIGHTING DEVICE
APPAREIL ELECTRIQUE POUR ETANGS, FONTAINES, AQUARIUMS ET INSTALLATIONS EXTERIEURES, COMPRENANT AU MOINS UN ELEMENT D'ECLAIRAGE

(30) Priorität: 10.12.2004 DE 102004059854
(43) Veröffentlichungstag der Anmeldung: 19.09.2007
(73) Patentinhaber: OASE GmbH, 48477 Hörstel-Riesenbeck (DE)
(72) Erfinder: HÖTTECKE, Martin, 48268 Greven (DE); HANKE, Andreas, 65520 Bad Camberg (DE)
(74) Vertreter: Engelmann, Kristiana
(86) Internationale Anmeldenummer: PCT/EP2005/013243
(87) Internationale Veröffentlichungsnummer: WO 2006/061241

(56) Entgegenhaltungen:
- EP-A- 0 616 975
- DE-A1- 10 128 946
- DE-A1- 19 619 022
- DE-U1- 29 505 952
- US-A1- 2002 189 986
- US-A1- 2004 164 686
- US-B1- 6 404 111
- US-B1- 6 685 890

## Beschreibung

Die Erfindung betrifft ein Unterwasserelektrogerät für Gartenteiche, Springbrunnen, Aquaristik und Außenanlagen, mit wenigstens einem Leuchtmittel, das über eine Stromzufuhr mit Strom versorgbar ist. Das Leuchtmittel ist in einem wasserdichten Trockenbereich des Unterwasserelektrogerätes untergebracht. Das Unterwasserelektrogerät weist zudem ein Schutzelement auf, das in eine das Leuchtmittel absichernde Schutzposition verbringbar ist. In dem Unterwasserelektrogerät ist ein bereichsweise von einem Wassergehäuse umgebener Naßbereich angeordnet, der wenigstens einen Wassereingang und wenigstens einen Wasserausgang aufweist.

Derartige Unterwasserelektrogeräte sind aus der DE 196 50 561 A1, der DE 101 47 019 A1 sowie der US 6,404,111 B1 zur Reinigung von Wasser bekannt. Dabei strömt das zu reinigende Wasser an einer UVC-Lampe vorbei und wird durch die Bestrahlung entkeimt. Die UVC-Lampe ist jeweils in einem Trockenbereich untergebracht, der größtenteils von einem zylindrischen Schutzelement gebildet wird, das zum Wechseln der Lampe aus seiner Schutzposition entfernt und anschließend wieder aufgesetzt werden kann.

Insbesondere wenn Wartungsarbeiten an den Unterwasserelektrogeräten erforderlich werden, kann der die Wartungsarbeiten Ausführende bei unsachgemäßer Durchführung der Arbeiten verletzt werden.

Aus der DE 101 28 946 A1 ist ebenfalls eine UV-Bestrahlungsvorrichtung bekannt. Die zu bestrahlende Flüssigkeit befindet sich in einem Bestrahlungsbehälter mit einer Öffnung, in die eine Lampeneinheit eingesetzt wird. Die Lampeneinheit weist eine von einem Hüllrohr wasserdicht umgebene Gasentladungslampe auf, die in das Innere des Bestrahlungsbehälters hineinragt. Die Stromzufuhr zur Gasentladungslampe ist in eine das Innere der Lampeneinheit übermantelnde Schutzkappe integriert. Um an die Gasentladungslampe zu gelangen, muß zunächst die Schutzkappe entfernt werden. Dabei wird die Stromzufuhr zur Lampe unterbunden. Hierdurch soll sichergestellt werden, daß Personen, die die Lampeneinheit von dem Bestrahlungsbehälter trennen, nicht versehentlich in die noch leuchtende Gasentladungslampe blicken und Schäden an den Augen davontragen.

Aus der US 6 315 424 B1 ist eine nicht gattungsgemäße Unterwasserbeleuchtung für einen Swimmingpool bekannt. Das Leuchtmittel befindet sich dabei in einem Trockenbereich, der von einem Grundgehäuse mit einer Öffnung und einer die Öffnung wasserdicht verschließenden transparenten Abdeckung gebildet wird. Sobald Wasser in den Trockenbereich eindringt, wird dieses von im Trockenbereich angeordneten Elektroden erkannt und die Stromzufuhr zum Leuchtmittel über eine Steuerung unterbrochen.

Desweiten ist aus der US 6 624 990 B1 eine nicht gattungsgemäße Anschlußbox für Unterwasserbeleuchtungen bekannt. Um Personen vor einem Stromschlag zu schützen, falls Wasser in das unter Wasser befindliche Lampengehäuse eindringen sollte, weist die Anschlußbox einen Fehlerstromschutzschalter auf. Dieser unterbricht die Stromzufuhr zur Lampe, sobald Fehlströme im Lampengehäuse auftreten.

Aus der DE 196 19 022 A1 ist eine nicht gattungsgemäße Wassertankanordnung bekannt, bei der Trinkwasser in einem Tankraum gelagert wird und dieses Trinkwasser mit Hilfe einer UV-Lampe keimfrei gehalten wird. Der Tankraum ist mit einem Deckel verschlossen, wobei die UV-Lampe erlischt, sobald der Deckel geöffnet wird. Eine weitere, nicht gattungsgemäße Vorrichtung ist aus der DE 295 05 952 U1 bekannt. Hierbei wird Wasser an einer UV-Lampe vorbeigeführt und dadurch entkeimt. Die Vorrichtung wird hierbei nur teilweise von Wasser durchströmt. Insbesondere die stromführenden Teile befinden sich nicht unterhalb einer Wasseroberfläche.

Die Erfindung befaßt sich mit der Aufgabe, ein Unterwasserelektrogerät der zuvor genannten Art mit verringertem Verletzungspotential zu entwickeln.

Die Erfindung löst diese Aufgabe durch ein Unterwasserelektrogerät mit den Merkmalen des Patentanspruchs 1. Weitere vorteilhafte Ausgestaltungen der Erfindung sind in den Unteransprüchen aufgeführt.

Das Schutzelement sichert das Leuchtmittel ab, wenn sich das Schutzelement in seiner Schutzposition befindet. Eine Unterbrecheranordnung des Unterwasserelektrogerätes trennt die Stromzufuhr zum Leuchtmittel, wenn sich das Schutzelement nicht in Schutzposition befindet und dadurch die Schutzwirkung des Schutzelementes nicht gewährleistet ist. Die Schutzwirkung besteht dabei insbesondere in einem Schutz vor einem Stromschlag einer an dem Unterwasserelektrogerät arbeitenden Person. Die Schutzwirkung kann jedoch auch darin bestehen, daß ein direkter Blick in das abstrahlende Leuchtmittel durch das in Schutzposition befindliche Schutzelement verhindert wird. Ein Verblitzen der Augen wird dadurch verhindert. Das erfindungsgemäße Unterwasserelektrogerät weist zudem eine Sicherheitseinrichtung auf, die die Stromzufuhr zum Leuchtmittel bei in den Trockenbereich eindringender Feuchtigkeit unterbricht. Hierzu umfaßt die Sicherheitseinrichtung bevorzugt eine Steuerung, die bei einem Alarmsignal die Stromzufuhr zu sämtlichen Stromabnehmern im Unterwasserelektrogerät - also auch zum Leuchtmittel - unterbricht. Wenn dann eindringendes Wasser den Stromanschluß des Leuchtmittels oder sonstiger Stromabnehmer im Unterwasserelektrogerät erreicht, steht dieser Stromanschluß bereits nicht mehr unter Strom. Eine Verletzung durch Stromschlag ist dadurch ausgeschlossen.

In einer bevorzugten Ausgestaltung der Erfindung weist die Unterbrecheranordnung ein stromleitendes Kontaktelement auf. Dieses überbrückt eine Unterbrechungsstelle der Stromzufuhr, wenn sich das Schutzelement in Schutzposition befindet. Hierzu ist das Kontaktelement mit Vorteil von einer die Stromzufuhr unterbindenden Unterbrecherposition in eine den Stromkreislauf schließenden Verbindungsposition verlagerbar.

In einer möglichen Ausgestaltung der Erfindung ist das Kontaktelement am Schutzelement angeordnet. In der Schutzposition des Schutzelementes nimmt das Kontaktelement eine definierte Position zur Unterbrechungsstelle ein und schließt diese. In einer anderen Ausgestaltung der Erfindung wirkt das Schutzelement in der Schutzposition auf das Kontaktelement ein. Die Einwirkung erfolgt dabei insbesondere mechanisch. Es sind jedoch auch andere Einwirkarten, z.B. magnetisch bedingte, denkbar.

Die Sicherheitseinrichtung weist mit Vorteil wenigstens zwei im Trockenbereich angeordnete und mit der Steuerung verbundene Elektroden auf, die durch in den Trockenbereich eindringendes Wasser stromleitend miteinander verbunden werden. Durch die stromleitende Verbindung wird dabei das Alarmsignal an die Steuerung abgegeben. Alternativ oder ergänzend kann im Trockenbereich ein Feuchtigkeitssensor angeordnet sein, der das Alarmsignal bei Kontakt mit Wasser an die Steuerung abgibt. Die Positionierung der Elektroden und/oder der Feuchtigkeitssensoren ist dabei von der jeweiligen Form des Unterwasserelektrogerätes abhängig. Grundsätzlich ist die Positionierung jedoch so gewählt, daß das Alarmsignal in jeder Lage des Unterwasserelektrogerätes abgegeben wird, noch bevor in den Trockenbereich eindringendes Wasser die dort befindlichen stromführenden Bauteile erreicht.

Zwischen den Elektroden kann eine Vertiefung angebracht sein, in der in den Trockenbereich eindringende Feuchtigkeit sich als erstes sammelt und dadurch die Elektroden stromleitend miteinander verbindet. Hierdurch wird das Alarmsignal an die Steuerung abgegeben, wenn bereits kleinste Mengen Feuchtigkeit in den Trockenbereich eingedrungen sind.

In den Fällen, in denen das Unterwasserelektrogerät neben dem Leuchtmittel weitere Stromabnehmer aufweist, sind die Unterbrecheranordnung und ggf. die Sicherheitseinrichtung bevorzugt auch diesen weiteren Stromabnehmern vorgeschaltet.

Weitere Einzelheiten und Vorteile der Erfindung ergeben sich aus den Unteransprüchen und den in den Figuren schematisch dargestellten Ausführungsbeispielen, die im folgenden beschrieben werden; es zeigen:
- Fig. 1: ein erfindungsgemäßes Unterwasserelektrogerät in dreidimensionaler Darstellung,
- Fig. 2: das Unterwasserelektrogerät aus Fig. 1 im Schnitt,
- Fig. 3: eine Detailvergrößerung des Unterwasserelektrogerätes aus Fig. 2 ohne Filter,
- Fig. 4: das Elektrogrät aus Fig. 3 jedoch mit anderem Wasserlauf,
- Fig. 5: eine Ausschnittvergrößerung aus Fig. 3,
- Fig. 6: den Gegenstand aus Fig. 5 bei nicht in Schutzposition befindlichem Schutzelement,
- Fig. 7: eine Aufsicht auf den Gegenstand aus Fig. 5 aus Richtung VII,
- Fig. 8: eine andere Ausgestaltung eines erfindungsgemäßen Unterwasserelektrogerätes in einer Schnittdarstellung entsprechend Fig. 3,
- Fig. 9: eine Aufsicht auf den Gegenstand aus Fig. 8 aus Richtung IX ohne ein Wassergehäuse,

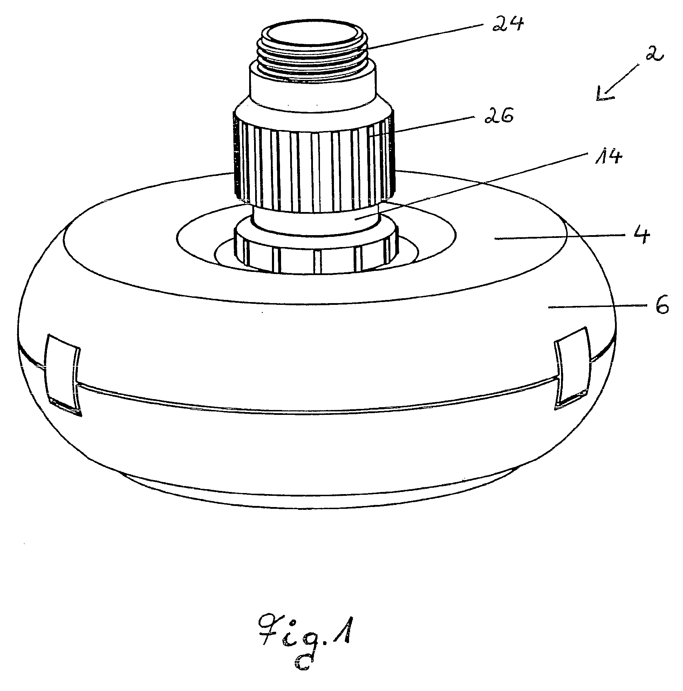

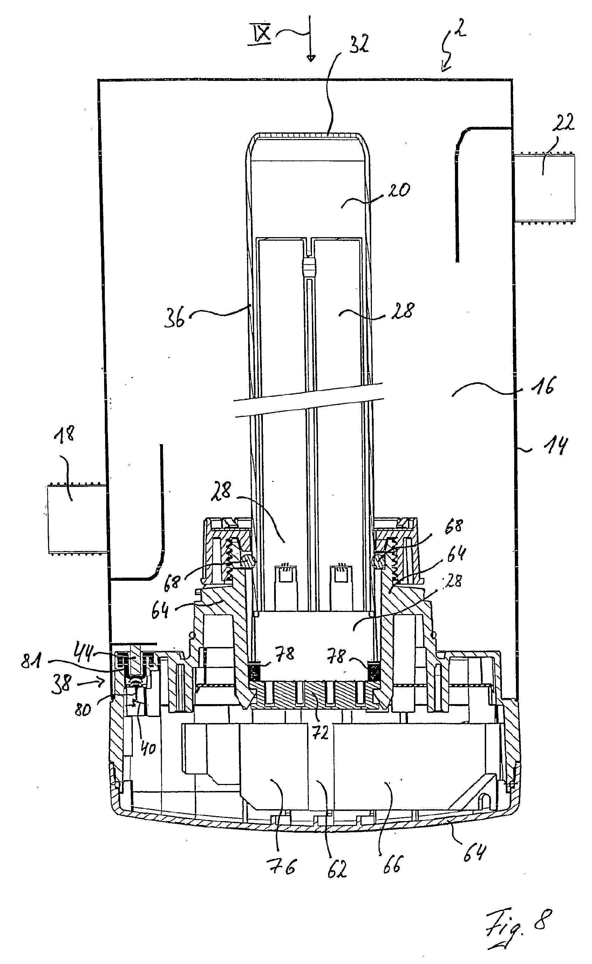

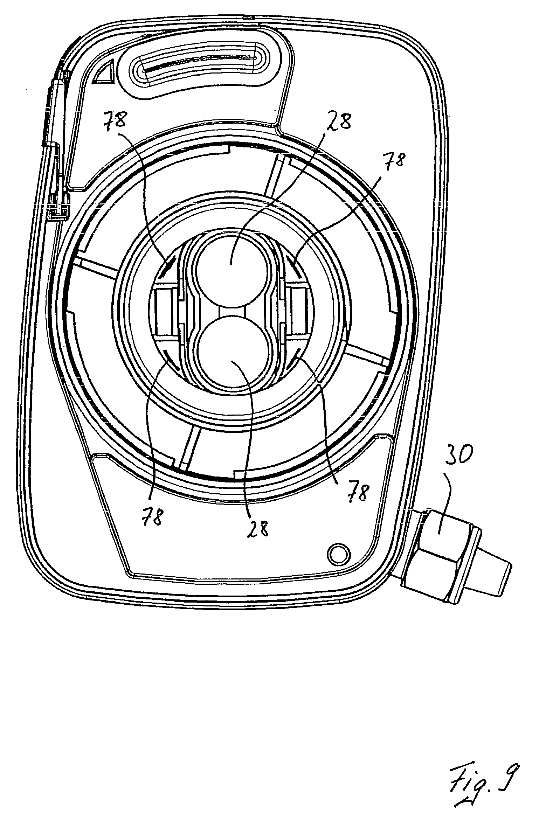

Insgesamt zeigen Fig. 1 bis Fig. 7 eine Ausgestaltung des erfindungsgemäßen Unterwasserelektrogerätes 2, das einströmendes Wasser filtert, mit UVC-Strahlung bestrahlt und das Wasser über eine Wasserfontäne abgeben kann. Fig. 8 und 9 zeigen dagegen eine Ausgestaltung, bei der das Wasser lediglich mit UVC-Strahlung behandelt wird. In Fig. 10 ist hingegen eine Ausgestaltung als Lichtstrahler beschrieben. Alle Ausgestaltungen sind grundsätzlich geeignet, als Unterwassergeräte bzw. genauer Unterwasserelektrogeräte z.B. in oder in der Nähe von Gartenteichen, Springbrunnen, Außenanlagen oder auch Aquarien eingesetzt zu werden.

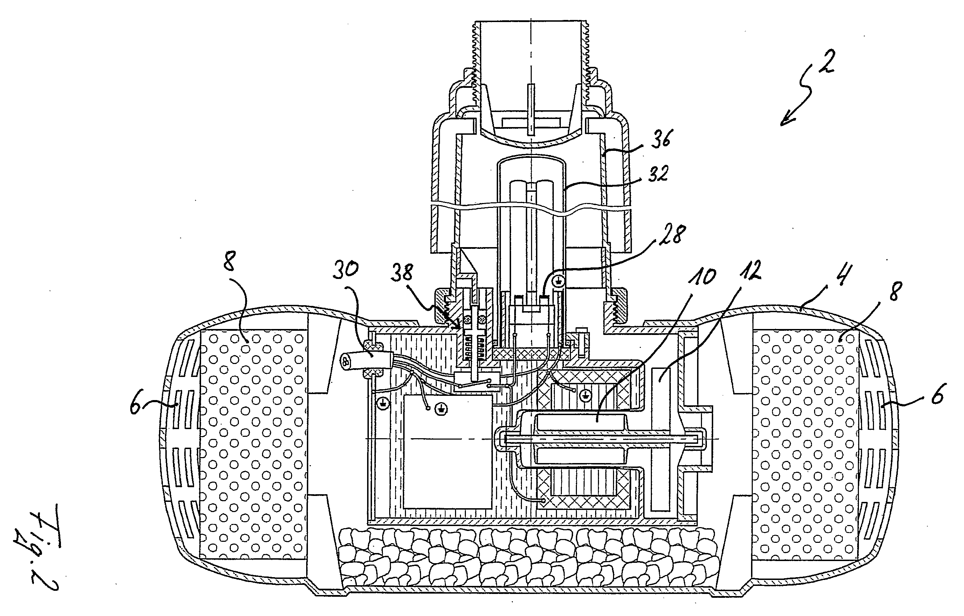

Das in Fig. 1 dargestellte Unterwasserelektrogerät 2 weist ein Filtergehäuse 4 auf, in das Wasser von außerhalb des Unterwasserelektrogerätes 2 durch Materialaussparungen 6 in das Innere des Unterwasserelektrogerätes 2 eindringen kann bzw. aktiv hineingesaugt oder -gedrückt wird. Das Innere des Unterwasserelektrogerätes 2 ist in Fig. 2 dargestellt. In dem Filtergehäuse 4 sind Filterschwämme 8 angeordnet, die in dem Wasser enthaltene Schmutzpartikel festhalten. Zum Transport des Wassers weist das Unterwasserelektrogerät 2 eine Pumpe 10 mit einem Mittel zur Wasserbeförderung, z.B. einem Flügelrad 12, auf.

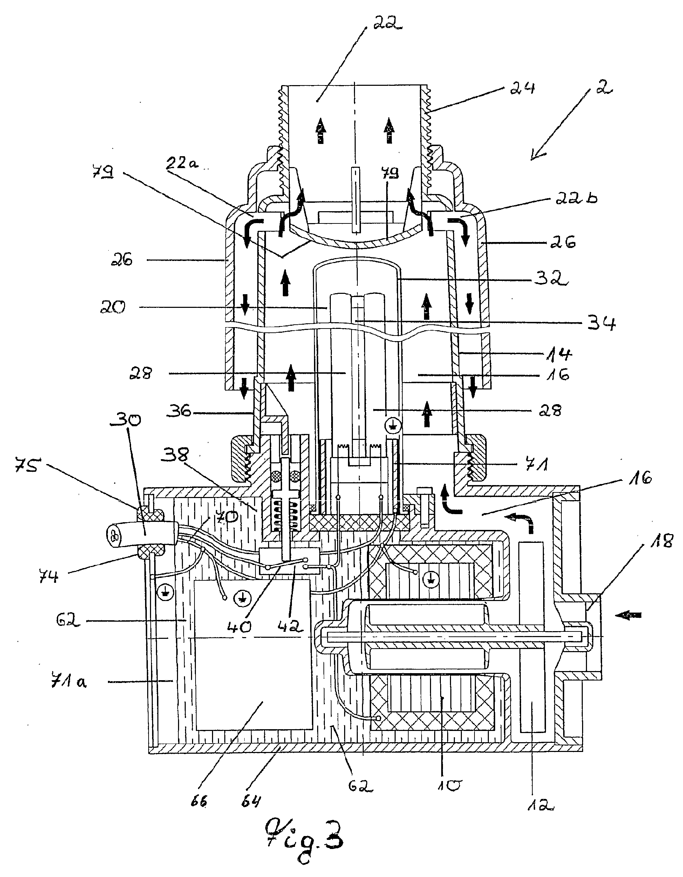

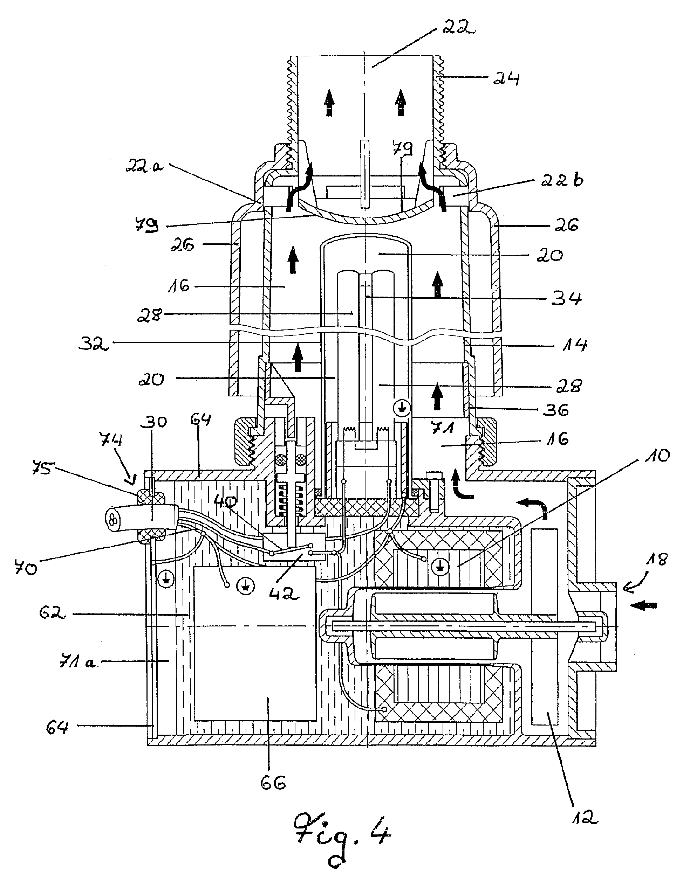

Der Verlauf des in das Innere des Unterwasserelektrogerätes 2 einströmenden Wassers ist in Fig. 3 und Fig. 4 durch Pfeile angedeutet. Vereinfachend sind das Filtergehäuse 4 und die Filterschwämme 8 in Fig. 3 ff. nicht abgebildet. In dem Unterwasserelektrogerät 2 ist ein bereichsweise von einem Wassergehäuse 14 umgebener Naßbereich 16 angeordnet. Die Pumpe 10 befördert Wasser von einem Wassereingang 18 des Unterwasserelektrogerätes 2 an einem Trockenbereich 20 vorbei zu Wasserausgängen 22, 22a, 22b.

An einem der Wasserausgänge 22 ist ein Druckstutzen 24 für eine in den Zeichnungen nicht dargestellte Wasserfontäne angeordnet. Die durch den Druckstutzen 24 fließende Wassermenge kann mit Hilfe einer Bypaßregelung 26 geregelt werden, die die übrigen Wasserausgänge 22a und 22b beliebig weit schließen kann. Um die Arbeitsweise der Bypaßregelung 26 zu veranschaulichen, sind die Wasserausgänge 22a und 22b in Fig. 3 weit geöffnet, während sie in Fig. 4 durch die Bypaßregelung 26 vollständig geschlossen sind. Bei weit geöffneter Bypaßregelung 26 strömt viel Wasser durch die Wasserausgänge 22a, 22b (Fig. 3). Folglich verläßt weniger Wasser das Unterwasserelektrogerät 2 durch den Druckstutzen 24. Bei durch die Bypaßregelung 26 geschlossenen Wasserausgängen 22a, 22b hingegen kann das Wasser nur durch den Druckstutzen 24 entweichen (Fig. 4). Der Wasserdruck in dem Druckstutzen 24 ist entsprechend höher. Durch Verstellen der Bypaßregelung 26 läßt sich eine auf dem Druckstutzen 24 montierte Fontäne regulieren.

Das Unterwasserelektrogerät 2 weist ein Leuchtmittel 28 auf, das in dem wasserdichten Trockenbereich 20 untergebracht ist und über eine Stromzufuhr 30 mit Strom versorgt wird. Das Leuchtmittel 28 wird bevorzugt von einer UVC-Lampe gebildet. Diese kann elektromagnetische Wellen mit einer Wellenlänge kleiner oder gleich 280 nm abstrahlen.

Der Trockenbereich 20 wird zumindest bereichsweise von einer wasserdichten Abdeckung 32 begrenzt. Die Abdeckung 32 ist wenigstens teilweise transparent ausgebildet, um von dem Leuchtmittel 28 erzeugte UVC-Strahlen durchzulassen. An dem Trockenbereich 20 im Naßbereich 16 vorbeiströmendes Wasser wird mit den Strahlen der UVC-Lampe 28 behandelt. Dabei wird biologisches Material, insbesondere Bakterien und Algen, abgetötet. Das Wasser wird somit gereinigt. Die Abdeckung 32 ist haubenartig geformt und besteht bevorzugt aus Quarzglas, da dieses UVC-Strahlung besonders gut passieren läßt.

Um innerhalb des Wassergehäuses 14 an der UVC-Lampe 28 bzw. der Abdeckung 32 vorbeigeführtes Wasser möglichst intensiv mit UVC-Strahlung zu bestrahlen, ist die UVC-Lampe 28 in der Nähe oder auf der Mittellächsachse 34 des Wassergehäuses 14 angeordnet. Zudem wird bevorzugt eine UVC-Lampe 28 gewählt, die mit mehr als 12 Volt Spannung betrieben wird. Insbesondere wird eine je nach Typ 30 Volt bis 80 Volt benötigende UVC-Lampe 28 eingesetzt.

Das Unterwasserelektrogerät 2 weist ein Schutzelement 36 auf, das in eine das Leuchtmittel 28 absichernde Schutzposition verbringbar ist. Das Schutzelement 36 wird in dem Ausführungsbeispiel in Fig. 1 bis Fig. 7 von dem Wassergehäuse 14 gebildet. Dabei schützt das Wassergehäuse 14 einerseits davor, daß Personen direkt in die eingeschaltete UVC-Lampe 28 blicken und sich dabei Schädigungen der Augen zuziehen. Zudem wird die UVC-Lampe 28 bzw. deren Stromanschluß vor einem direkten Zugriff von außerhalb des Unterwasserelektrogerätes 2 geschützt. Hierdurch werden an dem Unterwasserelektrogerät arbeitende Personen insbesondere vor einem Stromschlag geschützt. In dem Ausführungsbeispiel wird die Abdeckung 32 von dem Schutzelement 36 umgeben.

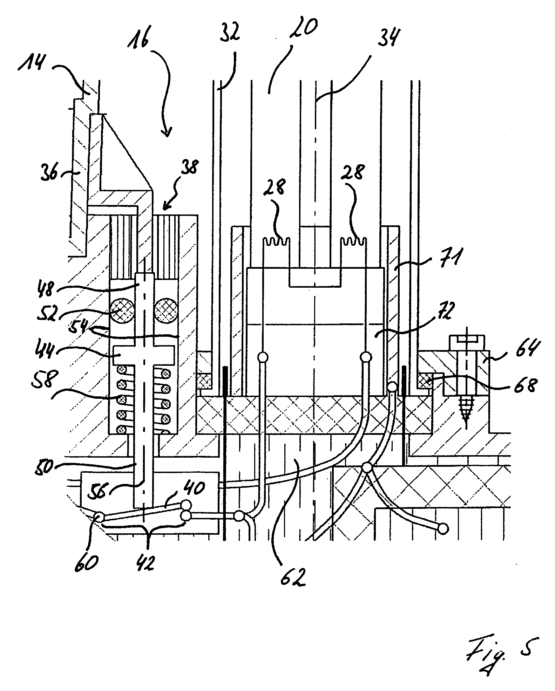

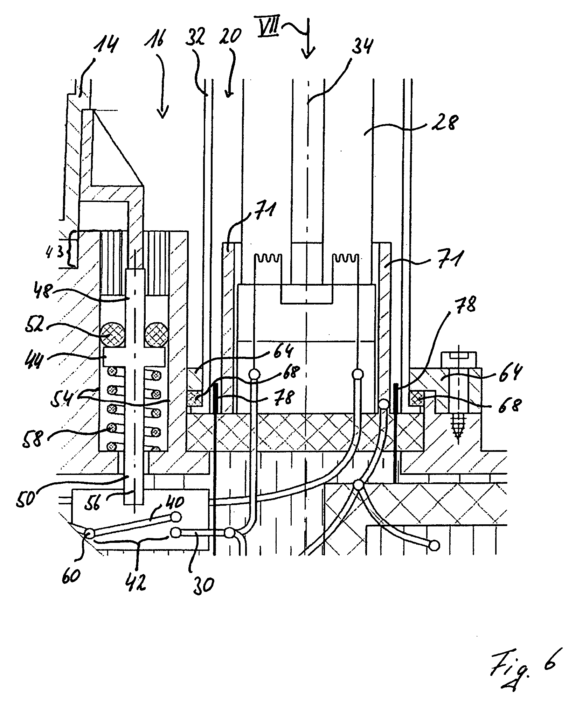

Das Unterwasserelektrogerät 2 weist eine Unterbrecheranordnung 38 auf, die die Stromzufuhr 30 zum Leuchtmittel 28 bei nicht in Schutzposition befindlichem Schutzelement 36 trennt. Die Unterbrecheranordnung 38 aus Fig. 3 und Fig. 4 ist in Fig. 5 vergrößert dargestellt. Die Unterbrecheranordnung 38 weist ein stromleitendes Kontaktelement 40 auf, das eine Unterbrechungsstelle 42 der Stromzufuhr 30 schließt, wenn sich das Schutzelement 36, wie in Fig. 5 dargestellt, in Schutzposition befindet. In Fig. 6 befindet sich das Schutzelement 36 hingegen außerhalb der Schutzposition. Das Kontaktelement 40 befindet sich dabei in einer die Stromzufuhr 30 unterbindenden Unterbrecherposition, so daß das gesamte Gerät stromlos ist. Zur weiteren Verbesserung der Sicherheit durchläuft das Schutzelement 36 im Verlaufe des Entfernens vom Unterwasserelektrogerät 2 nach Verlassen der Schutzposition einen Sicherheitsbereich 43, in dem die Stromzufuhr 40 zum Leuchtmittel 28 bereits unterbunden ist, das Schutzelement 36 aber noch einen direkten Blick in ein bereits erlöschendes aber gegebenenfalls noch nicht vollständig erloschenes Leuchtmittel 28 verhindert. Durch Schließen des Schutzelements 36 wird das Kontaktelement 40 in eine den Stromkreislauf schließende Verbindungsposition gebracht (Fig. 5).

Das Schutzelement 36 kann direkt oder indirekt mechanisch auf das Kontaktelement 40 einwirken und bringt dadurch das Kontaktelement 40 von der Unterbrecherposition in die Verbindungsposition. Die Einwirkung kann aber auch z.B. magnetisch erfolgen. In dem Ausführungsbeispiel ist in Fig. 5 und Fig. 6 eine indirekte Einwirkung des Schutzelements 36 auf das Kontaktelement 40 gezeigt, wobei zwischen Schutzelement 36 und Kontaktelement 40 ein Vermittler 44 angeordnet ist. Der Vermittler 44 weist einen ersten Bereich 48 auf, auf den das Schutzelement 36 oder ein mit diesem fest verbundener und damit zum Schutzelement 36 zählender Vorsprung einwirkt, und einen zweiten Bereich 50 der die Einwirkung des Schutzelementes 36 auf das Kontaktelement 40 überträgt. Im Falle einer in den Zeichnungen nicht dargestellten, magnetischen Einwirkung des Schutzelements 36 auf das Kontaktelement 40 kann die Unterbrecheranordnung 38 z.B. als Reed-Kontakt ausgebildet sein. Dabei steuert die Position des Schutzelements 36 direkt oder indirekt die Position oder Aktivierung eines Magnetfeldes, das auf das Kontaktelement 40 einwirken kann. Beispielsweise kann ein Permanetmagnet fest mit dem Schutzelement 36 verbunden sein und in der Verbindungsposition des Schutzelements 36 auf das Kontaktelement 40 einen Kontakt herstellend einwirken.

Um das Kontaktelement 40 vor aus dem Naßbereich 16 stammendem Wasser zu schützen, ist eine Dichtung 52 zwischen dem Vermittler 44 und einer Führungswandung 54, in der der Vermittler 44 entlang dessen Längsachse 56 verschiebbar ist, angeordnet. Der Vermittler 44 ist durch eine Feder 38 von dem Kontaktelement 40 weg kraftbeaufschlagt. Gleichzeitig ist das Kontaktelement 40 schwenkbeweglich um einen Schwenkpunkt 60 fixiert und mit einer an diesem angreifenden Drehfeder von der Verbindungsposition weg in die Unterbrechungsposition kraftbeaufschlagt bzw. vorgespannt. Die Drehfeder ist in den Zeichnungen nicht dargestellt. Der Schwenkpunkt 60 ist in dem Ausführungsbeispiel an einem Ende des Kontaktelementes 40 angeordnet. Diese Anordnung ist jedoch nicht zwingend. Selbstverständlich kann der Schwenkpunkt 60 auch anders positioniert sein, z.B. in der Mitte der Unterbrechungsstelle 42. Dies kann sinnvoll sein, wenn der Stromfluß zu mehreren parallelen Verbrauchern gleichzeitig unterbunden oder geschlossen werden soll.

Selbstverständlich sind auch andere Möglichkeiten des Zusammenspiels von Vermittler 44 und Kontaktelement 40 denkbar. Beispielsweise kann das Kontaktelement 40 fest mit dem Vermittler 44 verbunden sein. Entfernt sich dann der zweite Bereich 50 des Vermittlers von der Unterbrechungsstelle 42 der Stromzufuhr 30, wird das Kontaktelement 40 ebenfalls von der Unterbrechungsstelle 42 entfernt und begibt sich dadurch in die Unterbrechungsposition.

Wie u.a. in Fig. 3 und Fig. 4 dargestellt, ist innerhalb des Trockenbereichs 20 ein ebenfalls trockener Vergußbereich 62 angeordnet. In dem Vergußbereich 62 sind sämtliche elektrische Bauteile mit Ausnahme des Leuchtmittels 28 untergebracht und mit einer wasserundurchlässigen Vergußmasse umgeben. Lediglich der Stromanschluß für das Leuchtmittel 28 und das Leuchtmittel 28 selbst befinden sich nicht in dem Vergußbereich 62, sondern in dem übrigen Trockenbereich 20. Durch diese Anordnung sind sämtliche elektrischen Bauteile vor einem Kontakt mit Wasser geschützt.

Der Vergußbereich 62 wird bereichsweise von einem Grundgehäuse 64 begrenzt. Teilweise stellt der Vergußbereich 62 bzw. die Vergußmasse auch selbst die Abgrenzung des Trockenbereichs 20 zum Naßbereich 16 dar. Zu den elektrischen Bauteilen, die in dem Vergußbereich 62 angeordnet sind, gehören u.a. die elektrischen Teile der Pumpe 10, ein Vorschaltgerät 64 für das Leuchtmittel 28 sowie teilweise die Unterbrecheranordnung 38. Zwischen der Abdeckung 32 und dem Grundgehäuse 64 ist eine Dichtung 68 angeordnet, die ein Eindringen von Wasser aus dem Naßbereich 16 in den Trockenbereich 20 verhindert.

In einer hier nicht dargestellten aber zu dem Ausführungsbeispiel in Fig. 1 bis Fig. 7 analogen Ausgestaltung kann auch die haubenartige Abdeckung 32 aus Quarzglas das Schutzelement 36 des Unterwasserelektrogerätes 2 bilden. Die Schutzwirkung des Schutzelementes 36 bezieht sich dann nicht auf einen Verblitzungsschutz der Augen, sondern auf einen direkten Schutz vor einem Stromschlag. Sobald die Abdeckung 32 eine analog zu Fig. 3 und 4 angeordnete Schutzposition verlassen würde, würde die Unterbrecheranordnung 38 auch hier die Stromzufuhr 30 zum Leuchtmittel 28 trennen.

In dem Unterwasserelektrogerät 2 sind an verschiedenen Stellen mit einer Erdungsleitung 70 der Stromzufuhr 30 verbundene Erdungsmittel 71, 71a angeordnet. Die Erdungsmittel 71, 71a bestehen dabei bevorzugt aus Metall. Ein Erdungsmittel 71 befindet sich zwischen der Abdeckung 32 und dem Leuchtmittel 28. Hierbei ist das Leuchtmittel 28 in einem den Stromkontakt gewährleistenden Sockel 72 befestigt. Das Erdungsmittel 71 erstreckt sich im wesentlichen vollständig um den Sockel 72 herum. Sollte die Dichtung 52 undicht sein und Feuchtigkeit in den Trockenbereich 20 unterhalb der Abdeckung 32 eindringen, erreicht diese Feuchtigkeit als erstes das Erdungsmittel 71, bevor der Sockel 72 mit dem Stromkontakt feucht wird. Die Erdungsmittel 71, 71 a arbeiten in herkömmlicher Weise mit einem FI-Schutzschalter zusammen. Eine Verletzung durch Stromschlag kann dadurch verhindert werden.

Selbstverständlich kann auch das Grundgehäuse 64 aus Metall, insbesondere Edelstahl, gearbeitet sein und dann gleichzeitig als Erdungsmittel dienen. Hierdurch erübrigt sich das zusätzliche Erdungsmittel 71 a. Diese Ausgestaltung ist in den Figuren jedoch nicht dargestellt.

Die Stromzufuhr 30 führt in einem Eingangsbereich 74 in das Grundgehäuse 64 des Unterwasserelektrogerätes 2. Ein weiteres Erdungsmittel 71a ist auf der Innenseite der Grundgehäusewand 64 im Eingangsbereich 74 der Stromzufuhr 30 angeordnet. Dabei ist zwischen der Stromzufuhr 30 und dem Grundgehäuse 64 im Eingangsbereich 74 eine Dichtung 76 angebracht. Sollte diese Dichtung 76 undicht werden, gelangt an der Dichtung 76 vorbeidringendes Wasser als erstes an das Erdungsmittel 71a.

Wie in Fig. 2, Fig. 3 und Fig. 4 dargestellt, sind die Metallteile der in dem Vergußbereich 62 angeordneten elektrischen Bauteile, Vorschaltgerät 66 und Pumpe 10, ebenfalls mit der Erdungsleitung 70 verbunden.

Das Unterwasserelektrogerät 2 hat zusätzlich zur Unterbrecheranordnung 38 eine Sicherheitseinrichtung, die die Stromzufuhr 30 zum Leuchtmittel 28 und, sofern vorhanden, zu den sonstigen Stromabnehmern im Unterwasserelektrogerät 2 unterbricht, wenn Feuchtigkeit in den Trockenbereich 20 eindringt. Die Sicherheitseinrichtung umfaßt eine Steuerung 76, die im Vergußbereich 62 angeordnet ist (Fig. 8) und die mit Wasserdetektoren 78 verbunden ist. Diese lösen bei Kontakt mit Wasser ein Alarmsignal aus, bei dem die Steuerung 76 die Stromzufuhr zu sämtlichen Stromabnehmern im Unterwasserelektrogerät 2 unterbricht. Die Stromzufuhr 30 wird dabei im Vergußbereich 62, noch vor einer Abzweigung zu den Stromabnehmern unterbrochen.

Als Wasserdetektoren 78 können dabei Elektroden dienen, die im Trockenbereich 20 angeordnet sind. Durch in den Trockenbereich 20 eindringendes Wasser werden zumindest zwei Elektroden stromleitend miteinander verbunden. Dabei wird das Alarmsignal an die Steuerung 76 abgegeben. Alternativ oder ergänzend sind im Trockenbereich 20 ein oder mehrere Feuchtigkeitssensoren als Wasserdetektoren 78 angeordnet, die das Alarmsignal bei Kontakt mit Wasser an die Steuerung 76 abgeben.

Die Wasserdetektoren 78 sind dabei bevorzugt zwischen der Abdeckung 32 und dem Leuchtmittel 28 in einem Bereich angeordnet, der aufgrund der Einbaulage des Unterwasserelektrogerätes 2 bei in den Trockenbereich 20 eindringender Feuchtigkeit als erstes naß wird, bzw. in dem sich die Feuchtigkeit sammelt.

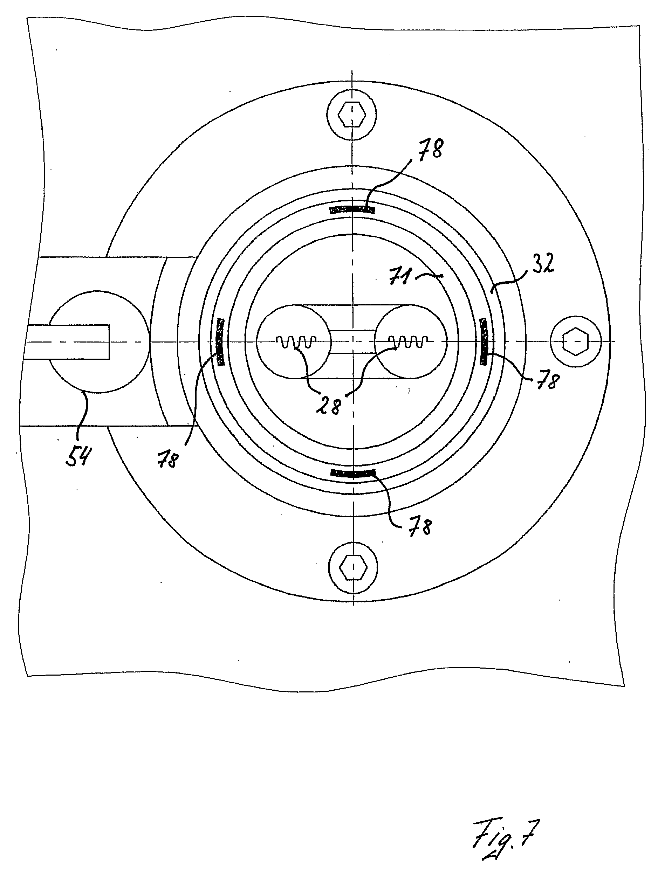

Die Position der Wasserdetektoren 78 ist in Fig. 5 und 6 bzw. in der Aufsicht in Fig. 7 dargestellt.

In dem Bereich der Wasserausgänge 22 ist ein zusätzlicher Sichtschutz 79 angeordnet, der einen freien Blick auf das Leuchtmittel 28 verhindert. Einer Verletzung der Augen durch Verblitzen wird dadurch entgegengewirkt.

Fig. 8 zeigt eine andere Ausgestaltung des erfindungsgemäßen Unterwasserelektrogerätes 2. Im Unterschied zur Ausgestaltung entsprechend Fig. 1 bis Fig. 7 weist die Ausgestaltung entsprechend Fig. 8 keinen Filter und keine eigene Pumpe auf. Da die Bauteile ansonsten ähnlich zu den Bauteilen in Fig. 1 bis Fig. 7 sind, wird bezüglich der Erläuterung der Bezifferung auf die vorherigen Ausführungen verwiesen.

Im Gegensatz zur Ausgestaltung entsprechend Fig. 1 bis Fig. 7 weist das Wassergehäuse 14 lediglich einen Wasserausgang 22 auf. Durch den Wassereingang 18 in das Wassergehäuse 14 einströmendes Wasser wird an der haubenförmigen Abdeckung 32 aus Quarzglas zum Wasserausgang 22 geleitet. Das Leuchtmittel 28 wird auch hier von einer UVC-Lampe gebildet, die das an der Abdeckung 32 vorbeigeführte Wasser mit UVC-Strahlung bestrahlt. Auch hier wird das Schutzelement 36 von dem Wassergehäuse 14 gebildet. Alternativ könnte auch die Abdeckung 32 als Schutzelement dienen.

Fig. 8 zeigt zudem eine alternative Ausführung der Unterbrechungseinheit 38. Der Vermittler 44 drückt nicht direkt auf das Kontaktelement 40, sondern wirkt indirekt über einen weiteren Vermittler 80 auf das Kontaktelement 40 ein. Zwischen dem Vermittler 44 und dem weiteren Vermittler 80 kann dann ein wasserundurchlässiges, flexibles Abdichtelement 81 angeordnet sein, das den Naßbereich 16 von dem Trockenbereich 20 trennt.

Fig. 9 zeigt das Unterwasserelektrogerät 2 aus Fig. 8 jedoch mit abgenommenem Wassergehäuse 14 in der Draufsicht. Die Wasserdetektoren 78 sind auch hier im Trockenbereich 20 unmittelbar neben dem Sockel 72 für das Leuchtmittel 28 und gleichmäßig um den Sockel 72 herum verteilt angeordnet.

## Patentansprüche

1. Unterwasserelektrogerät (2) für Gartenteiche, Springbrunnen und Außenanlagen, mit wenigstens einem Leuchtmittel (28), das über eine Stromzufuhr (30) mit Strom versorgbar und in einem wasserdichten Trockenbereich (20) untergebracht ist, mit einem Schutzelement (36), das in eine das Leuchtmittel (28) absichernde Schutzposition verbringbar ist und mit einem bereichsweise von einem Wassergehäuse (14) umgebenen Naßbereich (16), der wenigstens einen Wassereingang (18) und wenigstens einen Wasserausgang (22, 22a, 22b) aufweist, **dadurch gekennzeichnet, daß** das Wassergehäuse (14) das Schutzelement (36) bildet, das Unterwasserelektrogerät (2) eine die Stromzufuhr (30) zum Leuchtmittel (28) bei nicht in Schutzposition befindlichem Schutzelement (36) trennende Unterbrecheranordnung (38) aufweist und das Unterwasserelektrogerät (2) eine die Stromzufuhr (30) zum Leuchtmittel (28) bei in den Trockenbereich (20) eindringender Feuchtigkeit unterbrechende Sicherheitseinrichtung umfaßt.

2. Unterwasserelektrogerät nach Anspruch 1, **dadurch gekennzeichnet, daß** die Unterbrecheranordnung (38) ein stromleitendes Kontaktelement (40) aufweist, das eine Unterbrechungsstelle (42) der Stromzufuhr (30) schließt, wenn sich das Schutzelement (36) in Schutzposition befindet.

3. Unterwasserelektrogerät nach Anspruch 2, **dadurch gekennzeichnet, daß** das Kontaktelement (40) von einer die Stromzufuhr (30) unterbindenden Unterbrecherposition in eine den Stromkreislauf schließende Verbindungsposition verbringbar ist.

4. Unterwasserelektrogerät nach Anspruch 2 oder 3, **dadurch gekennzeichnet, daß** das Kontaktelement (40) am Schutzelement (36) angeordnet ist.

5. Unterwasserelektrogerät nach Anspruch 2 oder 3, **dadurch gekennzeichnet, daß** das Schutzelement (36) in der Schutzposition insbesondere mechanisch auf das Kontaktelement (40) einwirkt.

6. Unterwasserelektrogerät nach Anspruch 4, **gekennzeichnet durch** einen zwischen dem Schutzelement (36) und dem Kontaktelement (40) angeordneten Vermittler (44), der einen ersten Bereich (48) aufweist, auf den das Schutzelement (36) einwirkt, und einen zweiten Bereich (50), der die Einwirkung des Schutzelements (36) auf das Kontaktelement (40) überträgt.

7. Unterwasserelektrogerät nach Anspruch 6, **gekennzeichnet durch** wenigstens eine Dichtung (52), die den zweiten Bereich (50) des Vermittlers (44) wasserdicht von dessen erstem Bereich (48) abtrennt.

8. Unterwasserelektrogerät nach Anspruch 6 oder 7, **dadurch gekennzeichnet, daß** der Vermittler (44) kraftbeaufschlagt ist.

9. Unterwasserelektrogerät nach einem der Ansprüche 2 bis 8, **dadurch gekennzeichnet, daß** das Kontaktelement (40) schwenkbeweglich fixiert ist.

10. Unterwasserelektrogerät nach einem der Ansprüche 2 bis 9, **dadurch gekennzeichnet, daß** das Kontaktelement (40) kraftbeaufschlagt ist.

11. Unterwasserelektrogerät nach Anspruch 10, **dadurch gekennzeichnet, daß** die Kraft-beaufschlagung des Kontaktelements (40) mit einer Drehfeder erfolgt.

12. Unterwasserelektrogerät nach einem der vorhergehenden Ansprüche, **dadurch gekennzeichnet, daß** innerhalb des Trockenbereichs (20) ein Vergußbereich (62) angeordnet ist, in dem sämtliche elektrische Bauteile mit Ausnahme des Leuchtmittels (38) untergebracht und mit einer wasserundurchlässigen Vergußmasse umgeben sind.

13. Unterwasserelektrogerät nach Anspruch 12, **dadurch gekennzeichnet, daß** der Vergußbereich (62) bereichsweise von einem Grundgehäuse (64) begrenzt wird.

14. Unterwasserelektrogerät nach einem der vorhergehenden Ansprüche, **dadurch gekennzeichnet, daß** der Trockenbereich (20) zumindest bereichsweise von einer wasserdichten Abdeckung (32) begrenzt wird.

15. Unterwasserelektrogerät nach Anspruch 14, **dadurch gekennzeichnet, daß** die Abdeckung (32) zumindest bereichsweise transparent ausgebildet ist.

16. Unterwasserelektrogerät nach Anspruch 12 oder 13 und Anspruch 14 oder 15, gekenn-zeichnet durch eine Dichtung (68) zwischen der Abdeckung (32) und dem unmittelbar angrenzenden Vergußbereich (62) und/oder Grundgehäuse (64).

17. Unterwasserelektrogerät nach einem der Ansprüche 14 bis 16, **dadurch gekennzeichnet, daß** das Schutzelement (36) die Abdeckung (32) zumindest bereichsweise umgibt.

18. Unterwasserelektrogerät nach einem der vorhergehenden Ansprüche, **gekennzeichnet durch** wenigstens ein mit einer Erdungsleitung (70) der Stromzufuhr (30) verbundenes Erdungsmittel (71, 71a).

19. Unterwasserelektrogerät nach einem der Ansprüche 14 bis 17 und Anspruch 18, **dadurch gekennzeichnet, daß** sich das Erdungsmittel (71) zwischen der Abdeckung (32) und dem Leuchtmittel (28) befindet.

20. Unterwasserelektrogerät nach Anspruch 18 oder 19, **dadurch gekennzeichnet, daß** das Leuchtmittel (28) in einem den Stromkontakt gewährleistenden Sockel (72) befestigt ist und das Erdungsmittel (71) sich im wesentlichen vollständig um den Sockel (72) herum erstreckt.

21. Unterwasserelektrogerät nach Anspruch 12 und einem der Ansprüche 18 bis 20, **dadurch gekennzeichnet, daß** die Stromzufuhr (30) in einem Eingangsbereich (74) in das Grundgehäuse (64) des Unterwasserelektrogerätes (2) führt und das Erdungsmittel (71a) auf der Innenseite der Grundgehäusewand (64) im Eingangsbereich (74) der Stromzufuhr (30) angeordnet ist.

22. Unterwasserelektrogerät nach einem der vorhergehenden Ansprüche, **dadurch gekennzeichnet, daß** das Leuchtmittel (28) mehr als 12 V benötigt.

23. Unterwasserelektrogerät nach Anspruch 22, **dadurch gekennzeichnet, daß** die Sicherheitseinrichtung eine Steuerung (76) und wenigstens einen mit dieser verbundenen, ein Alarmsignal bei Kontakt mit Wasser auslösenden Wasserdetektor (78) umfaßt, wobei die Steuerung (76) bei einem Alarmsignal die Stromzufuhr (30) zu sämtlichen Stromabnehmern im UnterwassserUnterwasserelektrogerät unterbricht.

24. Unterwasserelektrogerät nach Anspruch 23, **dadurch gekennzeichnet, daß** als Wasserdetektoren (78) im Trockenbereich (20) wenigstens zwei Elektroden angeordnet sind, die durch in den Trockenbereich (20) eindringendes Wasser stromleitend miteinander verbindbar sind, wobei das Alarmsignal an die Steuerung (76) abgegeben wird.

25. Unterwasserelektrogerät nach Anspruch 23 oder 24, **gekennzeichnet durch** wenigstens einen im Trockenbereich (20) angeordneten Feuchtigkeitssensor als Wasserdetektor (78), der das Alarmsignal bei Kontakt mit Wasser an die Steuerung (76) sendet.

26. Unterwasserelektrogerät nach einem der Ansprüche 23 bis 25, **dadurch gekennzeichnet, daß** die Wasserdetektoren (78) zwischen der Abdeckung (32) und dem Leuchtmittel (28) angeordnet sind.

27. Unterwasserelektrogerät nach einem der vorhergehenden Ansprüche, **dadurch gekennzeichnet, daß** das Leuchtmittel (28) UVC-Strahlen aussendet.

28. Unterwasserelektrogerät nach den Ansprüchen 27 und 14, **dadurch gekennzeichnet, daß** die Abdeckung (32) zumindest bereichsweise aus Quarzglas besteht.

29. Unterwasserelektrogerät nach einem der vorhergehenden Ansprüche, **dadurch gekennzeichnet, daß** durch den Wassereingang (18) in den Naßbereich (16) einströmendes Wasser an dem Trockenbereich (20) vorbei zum Wasserausgang (22, 22a, 22b) befördert wird.

30. Unterwasserelektrogerät nach einem der vorhergehenden Ansprüche, **dadurch gekennzeichnet, daß** das Unterwasserelektrogerät (2) zusätzlich eine Pumpe (10) aufweist, deren Stromzufuhr (30) durch die Unterbrecheranordnung (38) und/oder ggf. durch die Sicherheitseinrichtung unterbindbar ist.

31. Unterwasserelektrogerät nach einem der vorhergehenden Ansprüche, **gekennzeichnet durch** einen einen freien Blick auf das Leuchtmittel (28) verhindernden Sichtschutz (81) im Bereich der Wasserausgänge (22, 22a, 22b).

32. Unterwasserelektrogerät nach einem der vorhergehenden Ansprüche, **dadurch gekennzeichnet, daß** an einem Wasserausgang (22) ein Druckstutzen (24) für eine Wasserfontäne angeordnet ist.

33. Unterwasserelektrogerät nach einem der vorhergehenden Ansprüche, **dadurch gekennzeichnet, daß** wenigstens ein Leuchtmittel (28) sichtbares Licht abstrahlt.

34. Unterwasserelektrogerät nach Anspruch 33 und Anspruch 13, **dadurch gekennzeichnet, daß** das Grundgehäuse (64) eine Öffnung aufweist, die von der Abdeckung (32) wasserdicht verschlossen ist.

## Claims

1. Underwater electrical appliance (2) for garden ponds, water fountains and outdoor installations, comprising at least one lighting means (28) which can be supplied with power by a power supply (30) and is housed in a watertight dry region (20), comprising a protective element (36) which can be brought into a protective position which protects the lighting means (28), and comprising a wet region (16) which is surrounded in regions by a water housing (14) and which has at least one water inlet (18) and at least one water outlet (22, 22a, 22b), **characterised in that** the water housing (14) forms the protective element (36), the underwater electrical appliance (2) has an interrupter assembly (38) which disconnects the power supply (30) from the lighting means (28) when the protective element (36) is not in the protective position, and the underwater electrical appliance (2) comprises a safety apparatus which interrupts the power supply (30) to the lighting means (28) when moisture penetrates the dry region (20).

2. Underwater electrical appliance according to claim 1, **characterised in that** the interrupter assembly (38) has an electrically conductive contact element (40) which closes an interruption point (42) of the power supply (30) when the protective element (36) is in the protective position.

3. Underwater electrical appliance according to claim 2, **characterised in that** the contact element (40) can be brought from a interrupter position, which stops the power supply (30), into a connection position, which closes the electrical circuit.

4. Underwater electrical appliance according to either claim 2 or claim 3, **characterised in that** the contact element (40) is arranged on the protective element (36).

5. Underwater electrical appliance according to either claim 2 or claim 3, **characterised in that**, when in the protective position, the protective element (36) acts in particular mechanically on the contact element (40).

6. Underwater electrical appliance according to claim 4, **characterised by** a switching element (44) which is arranged between the protective element (36) and the contact element (40) and has a first region (48) on which the protective element (36) acts and a second region (50) which transfers the action of the protective element (36) to the contact element (40).

7. Underwater electrical appliance according to claim 6, **characterised by** at least one seal (52) which separates the second region (50) of the switching element (44) from the first region (48) thereof in a watertight manner.

8. Underwater electrical appliance according to either claim 6 or claim 7, **characterised in that** force is applied to the switching element (44).

9. Underwater electrical appliance according to any of claims 2 to 8, **characterised in that** the contact element (40) is pivotally fixed.

10. Underwater electrical appliance according to any of claims 2 to 9, **characterised in that** force is applied to the contact element (40).

11. Underwater electrical appliance according to claim 10, **characterised in that** force is applied to the contact element (40) by a torsion spring.

12. Underwater electrical appliance according to any of the preceding claims, **characterised in that** a cast region (62) is arranged inside the dry region (20), in which cast region all electrical components except the lighting means (38) are housed and are surrounded by a water-impermeable casting compound.

13. Underwater electrical appliance according to claim 12, **characterised in that** the cast region (62) is delimited in regions by a basic housing (64).

14. Underwater electrical appliance according to any of the preceding claims, **characterised in that** the dry region (20) is delimited by a watertight cover (32) at least in regions.

15. Underwater electrical appliance according to claim 14, **characterised in that** the cover (32) is transparent at least in regions.

16. Underwater electrical appliance according to either claim 12 or claim 13 and either claim 14 or claim 15, **characterised by** a seal (68) between the cover (32) and the directly adjacent cast region (62) and/or basic housing (64).

17. Underwater electrical appliance according to any of claims 14 to 16, **characterised in that** the protective element (36) surrounds the cover (32) at least in regions.

18. Underwater electrical appliance according to any of the preceding claims, **characterised by** at least one earthing means (71, 71 a) which is connected to an earth conductor (70) of the power supply (30).

19. Underwater electrical appliance according to any of claims 14 to 17 and claim 18, **characterised in that** the earthing means (71) is located between the cover (32) and the lighting means (28).

20. Underwater electrical appliance according to either claim 18 or claim 19, **characterised in that** the lighting means (28) is fastened in a base (72) which ensures the electrical contact and the earthing means (71) extends substantially completely around the base (72).

21. Underwater electrical appliance according to claim 12 and any of claims 18 to 20, **characterised in that** the power supply (30) leads into an inlet region (74) in the basic housing (64) of the underwater electrical appliance (2) and the earthing means (71 a) is arranged in the inlet region (74) of the power supply (30) on the inner side of the basic housing wall (64).

22. Underwater electrical appliance according to any of the preceding claims, **characterised in that** the lighting means (28) requires more than 12 V.

23. Underwater electrical appliance according to claim 22, **characterised in that** the safety apparatus comprises a control system (76) and at least one water detector (78) which is connected thereto and triggers an alarm signal upon contact with water, the control system (76) interrupting the power supply (30) to all the current consumers in the underwater electrical appliance when there is an alarm signal.

24. Underwater electrical appliance according to claim 23, **characterised in that** at least two electrodes are arranged in the dry region (20) as water detectors (78), which electrodes can be electrically conductively interconnected by water which penetrates the dry region (20), the alarm signal being sent to the control system (76).

25. Underwater electrical appliance according to either claim 23 or claim 24, **characterised by** at least one moisture sensor which is arranged in the dry region (20) as a water detector (78) which sends the alarm signal to the control system (76) upon contact with water.

26. Underwater electrical appliance according to any of claims 23 to 25, **characterised in that** the water detectors (78) are arranged between the cover (32) and the lighting means (28).

27. Underwater electrical appliance according to any of the preceding claims, **characterised in that** the lighting means (28) emits UVC rays.

28. Underwater electrical appliance according to claims 27 and 14, **characterised in that** the cover (32) consists of quartz glass at least in regions.

29. Underwater electrical appliance according to any of the preceding claims, **characterised in that** water flowing through the water inlet (18) into the wet region (16) is transported past the dry region (20) to the water outlet (22, 22a, 22b).

30. Underwater electrical appliance according to any of the preceding claims, **characterised in that** the underwater electrical appliance (2) additionally has a pump (10), the power supply (30) of which can be stopped by the interrupter assembly (38) and/or optionally by the safety apparatus.

31. Underwater electrical appliance according to any of the preceding claims, **characterised by** a screen (81) in the region of the water outlets (22, 22a, 22b) which prevents an unobstructed view to the lighting means (28).

32. Underwater electrical appliance according to any of the preceding claims, **characterised in that** a pressure connection (24) for a water fountain is arranged on a water outlet (22).

33. Underwater electrical appliance according to any of the preceding claims, **characterised in that** at least one lighting means (28) emits visible light.

34. Underwater electrical appliance according to claim 33 and claim 13, **characterised in that** the basic housing (64) has an opening which is closed by the cover (32) in a watertight manner.

## Revendications

1. Appareil électrique subaquatique (2) pour étangs, fontaines et installations extérieures, comprenant au moins un élément d'éclairage (28) qui peut être alimenté en courant par l'intermédiaire d'une alimentation électrique (30) et peut être mis en place dans une zone sèche (20) étanche à l'eau, un élément de protection (36) qui peut être mis dans une position de protection dans laquelle il protège l'élément d'éclairage (28), ainsi qu'une zone humide (16) qui est entourée par endroits par un boîtier d'eau (14) et qui présente au moins une entrée d'eau (18) et au moins une sortie d'eau (22, 22a, 22b), **caractérisé en ce que** le boîtier d'eau (14) forme l'élément de protection (36), l'appareil électrique subaquatique (2) présente un agencement coupe-circuit (38) qui sépare l'alimentation électrique (30) de l'élément d'éclairage (28) lorsque l'élément de protection (36) ne se trouve pas dans la position de protection et l'appareil électrique subaquatique (2) comprend un dispositif de sécurité interrompant l'alimentation électrique (30) vers l'élément d'éclairage (28) lorsque de l'humidité pénètre dans la zone sèche (20).

2. Appareil électrique subaquatique selon la revendication 1, **caractérisé en ce que** l'agencement coupe-circuit (38) présente un élément de contact (40) électriquement conducteur qui ferme un point d'interruption (42) de l'alimentation électrique (30) lorsque l'élément de protection (36) se trouve dans la position de protection.

3. Appareil électrique subaquatique selon la revendication 2, **caractérisé en ce que** l'élément de contact (40) peut être mis d'une position de coupe-circuit empêchant l'alimentation électrique (30) dans une position de connexion fermant le circuit électrique.

4. Appareil électrique subaquatique selon la revendication 2 ou 3, **caractérisé en ce que** l'élément de contact (40) est disposé sur l'élément de protection (36).

5. Appareil électrique subaquatique selon la revendication 2 ou 3, **caractérisé en ce que** l'élément de protection (36) dans la position de protection agit en particulier mécaniquement sur l'élément de contact (40).

6. Appareil électrique subaquatique selon la revendication 4, **caractérisé par** un relais (44) qui est disposé entre l'élément de protection (36) et l'élément de contact (40) et qui présente une première zone (48), sur laquelle agit l'élément de protection (36), et une seconde zone (50) qui transmet l'action de l'élément de protection (36) sur l'élément de contact (40).

7. Appareil électrique subaquatique selon la revendication 6, **caractérisé par** au moins un joint d'étanchéité (52) qui sépare la seconde zone (50) du relais (44) de sa première zone (48) de manière étanche à l'eau.

8. Appareil électrique subaquatique selon la revendication 6 ou 7, **caractérisé en ce que** le relais (44) est sollicité par la force.

9. Appareil électrique subaquatique selon une des revendications 2 à 8, **caractérisé en ce que** l'élément de contact (40) est fixé de manière à pouvoir pivoter.

10. Appareil électrique subaquatique selon une des revendications 2 à 9, **caractérisé en ce que** l'élément de contact (40) est sollicité par la force.

11. Appareil électrique subaquatique selon la revendication 10, **caractérisé en ce que** la sollicitation par la force de l'élément de contact (40) se fait à l'aide d'un ressort rotatif.

12. Appareil électrique subaquatique selon une des revendications précédentes, **caractérisé en ce que**, à l'intérieur de la zone sèche (20), est disposée une zone de scellement (62) dans laquelle tous les composants électriques à l'exception de l'élément d'éclairage (38) sont mis en place et sont entourés d'une masse de scellement imperméable à l'eau.

13. Appareil électrique subaquatique selon la revendication 12, **caractérisé en ce que** la zone de scellement (62) est délimitée par endroits par un boîtier de base (64).

14. Appareil électrique subaquatique selon une des revendications précédentes, **caractérisé en ce que** la zone sèche (20) est délimitée au moins par endroits par un couvercle (32) étanche à l'eau.

15. Appareil électrique subaquatique selon la revendication 14, **caractérisé en ce que** le couvercle (32) est configuré transparent au moins par endroits.

16. Appareil électrique subaquatique selon la revendication 12 ou 13 et la revendication 14 ou 15, **caractérisé par** un joint d'étanchéité (68) entre le couvercle (32) et la zone de scellement (62) et/ou le boîtier de base (64) directement adjacent(e).

17. Appareil électrique subaquatique selon une des revendications 14 à 16, **caractérisé en ce que** l'élément de protection (36) entoure le couvercle (32) au moins par endroits.

18. Appareil électrique subaquatique selon une des revendications précédentes, **caractérisé par** au moins un élément de mise à la terre (71, 71 a) relié à une ligne de terre (70) de l'alimentation électrique (30).

19. Appareil électrique subaquatique selon une des revendications 14 à 17 et la revendication 18, **caractérisé en ce que** l'élément de mise à la terre (71) se trouve entre le couvercle (32) et l'élément d'éclairage (28).

20. Appareil électrique subaquatique selon la revendication 18 ou 19, **caractérisé en ce que** l'élément d'éclairage (28) est fixé dans un socle (72) garantissant le contact électrique et l'élément de mise à la terre (71) s'étend sensiblement complètement autour du socle (72).

21. Appareil électrique subaquatique selon la revendication 12 et une des revendications 18 à 20, **caractérisé en ce que** l'alimentation électrique (30) conduit, dans une zone d'entrée (74), jusque dans le boîtier de base (64) de l'appareil électrique subaquatique (2) et l'élément de mise à la terre (71 a) est disposé sur la face intérieure de la paroi du boîtier de base (64) dans la zone d'entrée (74) de l'alimentation électrique (30).

22. Appareil électrique subaquatique selon une des revendications précédentes, **caractérisé en ce que** l'élément d'éclairage (28) nécessite plus de 12 V.

23. Appareil électrique subaquatique selon la revendication 22, **caractérisé en ce que** le dispositif de sécurité comprend une commande (76) et au moins un détecteur d'eau (78) relié à celle-ci et déclenchant un signal d'alarme en cas de contact avec l'eau, la commande (76) interrompant l'alimentation électrique (30) vers tous les récepteurs de courant dans l'appareil électrique subaquatique en cas de signal d'alarme.

24. Appareil électrique subaquatique selon la revendication 23, **caractérisé en ce qu'**au moins deux électrodes servant de détecteurs d'eau (78) sont disposées dans la zone sèche (20) et peuvent être reliées l'une à l'autre de manière conductrice électriquement par l'eau pénétrant dans la zone sèche (20), le signal d'alarme étant transmis à la commande (76).

25. Appareil électrique subaquatique selon la revendication 23 ou 24, **caractérisé par** au moins un capteur d'humidité, disposé dans la zone sèche (20) et servant de détecteur d'eau (78), qui envoie le signal d'alarme à la commande (76) en cas de contact avec l'eau.

26. Appareil électrique subaquatique selon une des revendications 23 à 25, **caractérisé en ce que** les détecteurs d'eau (78) sont disposés entre le couvercle (32) et l'élément d'éclairage (28).

27. Appareil électrique subaquatique selon une des revendications précédentes, **caractérisé en ce que** l'élément d'éclairage (28) envoi des rayons UVC.

28. Appareil électrique subaquatique selon les revendications 27 et 14, **caractérisé en ce que** le couvercle (32) est composé en verre quartzeux au moins par endroits.

29. Appareil électrique subaquatique selon une des revendications précédentes, **caractérisé en ce que** l'eau affluant dans la zone sèche (20) par l'entrée d'eau (18) dans la zone humide (16) est transportée jusqu'à la sortie d'eau (22, 22a, 22b).

30. Appareil électrique subaquatique selon une des revendications précédentes, **caractérisé en ce que** l'appareil électrique subaquatique (2) présente en outre une pompe (10) dont l'alimentation électrique (30) peut être empêchée par l'agencement coupe-circuit (38) et/ou éventuellement par le dispositif de sécurité.

31. Appareil électrique subaquatique selon une des revendications précédentes, **caractérisé par** une protection visuelle (81) au niveau des sorties d'eau (22, 22a, 22b) qui empêche de regarder librement l'élément d'éclairage (28).

32. Appareil électrique subaquatique selon une des revendications précédentes, **caractérisé en ce que**, sur une sortie d'eau (22), est disposé un raccord sous pression (24) pour une fontaine à eau.

33. Appareil électrique subaquatique selon une des revendications précédentes, **caractérisé en ce qu'**au moins un élément d'éclairage (28) émet une lumière visible.

34. Appareil électrique subaquatique selon la revendication 33 et la revendication 13, **caractérisé en ce que** le boîtier de base (64) présente une ouverture qui est fermée de manière étanche à l'eau par le couvercle (32).
